Europäisches Patentamt

European Patent Office

Office européen des brevets

(11) Numéro de publication: **0 381 549**
**A1**

## (12) DEMANDE DE BREVET EUROPEEN

(21) Numéro de dépôt: **90400165.8**

(22) Date de dépôt: **22.01.90**

(51) Int. Cl.5: **G21C 19/34, G21F 5/008**

(30) Priorité: **23.01.89 FR 8900748**

(43) Date de publication de la demande:
**08.08.90 Bulletin 90/32**

(84) Etats contractants désignés:
**BE CH DE ES GB LI**

(71) Demandeur: **COMMISSARIAT A L'ENERGIE ATOMIQUE**
**31/33, rue de la Fédération**
**F-75015 Paris(FR)**

(72) Inventeur: **Manson, Marcel**
**Villa No. 24, Résidence du Petit Nice**
**F-13100 Aix en Provence(FR)**

(74) Mandataire: **Mongrédien, André et al**
**c/o BREVATOME 25, rue de Ponthieu**
**F-75008 Paris(FR)**

(54) Dispositif de transfert et de rangement dans un conteneur, de barreaux pour assemblage de combustible nucléaire et conteneur utilisable avec ce dispositif.

(57) Dispositif de transfert et de rangement dans un conteneur, de barreaux pour assemblage de combustible nucléaire et conteneur utilisable avec ce dispositif.

Le dispositif comprend des moyens de récupération et de guidage (16, 18, 20) qui ont une extrémité supérieure et une extrémité inférieure ouvertes et qui sont prévus pour récupérer chaque barreau (4) que l'on fait tomber de moyens de support (6) et pour guider ce barreau, soumis à son poids, vers le conteneur (2), ce dernier étant incliné par rapport à la verticale et ouvert en son extrémité supérieure, l'extrémité inférieure des moyens de récupération et de guidage (16, 18, 20) étant destinée à communiquer avec l'intérieur du conteneur par l'extrémité supérieure de ce dernier de façon que les barreaux puissent être rangés successivement dans le conteneur qui a avantageusement une paroi interne de section transversale hexagonale.

FIG. 1

## DISPOSITIF DE TRANSFERT ET DE RANGEMENT DANS UN CONTENEUR, DE BARREAUX POUR ASSEMBLAGE DE COMBUSTIBLE NUCLEAIRE ET CONTENEUR UTILISABLE AVEC CE DISPOSITIF

La présente invention concerne un dispositif de transfert et de rangement dans un conteneur, de barreaux pour assemblage de combustible nucléaire, ainsi qu'un conteneur utilisable avec ce dispositif.

Elle trouve une application particulièrement importante, bien que non exclusive, dans le domaine des réacteurs nucléaires refroidis et modérés à l'eau légère et notamment des réacteurs à eau sous pression, tous ces réacteurs utilisant des grappes de barreaux, ou crayons, qui sont insérables dans les assemblages de combustible que comportent ces réacteurs.

On sait que, dans un réacteur nucléaire à eau légère, des barreaux sont introduits dans les tubes-guides des assemblages de combustible qui sont placés dans le réacteur. Ces barreaux, regroupés en grappes, sont de différents types. Certaines grappes, mobiles par rapport à leurs assemblages respectifs, sont formées de barreaux qui contiennent une substance apte à absorber les neutrons et servent au réglage de la puissance ou à l'arrêt d'urgence du réacteur. D'autres grappes sont fixes par rapport à leurs assemblages respectifs. Les barreaux qu'elles comportent restent donc insérés dans ces assemblages pendant toute la durée d'un cycle d'irradiation. Ces barreaux peuvent être de divers types :

- barreaux à poison consommable (bore ou gadolinium par exemple) pour réduire la réactivité du coeur du réacteur en début de cycle,
- barreaux-sources primaires ou secondaires servant au démarrage du réacteur,
- barreaux fertiles à uranium appauvri, sous forme de $UO_2$, pour produire du plutonium,
- barreaux combustibles expérimentaux,
- barreaux pour la production de radionucléides à longue durée de vie ...

La caractéristique commune à ces grappes est leur durée d'irradiation qui est limitée de un à quelques cycles du réacteur, après quoi elles sont déchargées du coeur avec leurs assemblages respectifs et extraites de ceux-ci dans la piscine du "bâtiment combustible" attenant au réacteur. Puis, suivant la nature des barreaux qu'elles comportent, les grappes sont transportées dans des installations spécialisées, soit pour les conditionner s'il s'agit de déchets, soit pour en extraire la partie valorisable, ou bien sont transportées vers des laboratoires d'étude.

En général, les barreaux ne sont pas démontables de leur grappe et celle-ci doit être transportée telle quelle avec tous les inconvénients que cela représente en encombrement et en risque d'endommagement.

Cependant, pour réduire ces inconvénients, deux solutions ont été proposées : le découpage du bouchon supérieur des barreaux, comme l'enseigne le brevet FR-A-2599884, ou l'utilisation d'une fixation démontable des barreaux, comme l'enseigne le brevet FR-A-2439457.

On a donc, par ces brevets, deux exemples de techniques qui permettent la séparation des barreaux de leur grappe les uns après les autres.

Cette opération de séparation des barreaux irradiés de leur grappe doit être réalisée dans la piscine de désactivation attenante au réacteur, à distance et sous plusieurs mètres d'eau pour la sécurité des opérateurs.

La présente invention résout le problème du transfert et du rangement automatiques dans un conteneur, des barreaux ainsi séparés les uns après les autres de leur grappe.

L'invention porte également sur un conteneur permettant ce rangement des barreaux sous forme compacte ainsi qu'un transport de ces barreaux sans risque d'endommagement.

De façon précise, la présente invention a tout d'abord pour objet un dispositif de transfert et de rangement dans un conteneur de forme allongée, de barreaux pour assemblage de combustible nucléaire, ces barreaux étant suspendus verticalement à des moyens de support sur lesquels on peut agir pour faire tomber les barreaux les uns après les autres, ce dispositif étant caractérisé en ce qu'il comprend des moyens de récupération et de guidage qui ont une extrémité supérieure et une extrémité inférieure ouvertes et qui sont prévus pour récupérer chaque barreau que l'on fait tomber des moyens de support et pour guider ce barreau, soumis à son poids, vers le conteneur, ce dernier étant incliné par rapport à la verticale et ouvert en son extrémité supérieure, l'extrémité inférieure des moyens de récupération et de guidage étant destinée à communiquer avec l'intérieur du conteneur par l'extrémité supérieure de ce dernier de façon que les barreaux puissent être rangés successivement dans le conteneur.

Les barreaux, libérés les uns après les autres de leurs moyens de support et soumis à leur propre poids, vont ainsi être transférés et rangés automatiquement dans le conteneur.

Selon un mode de réalisation préféré du dispositif objet de l'invention, les moyens de récupération et de guidage comprennent :
- un entonnoir qui se trouve en leur extrémité supérieure et qui est prévu pour recevoir les barreaux après leur séparation des moyens de support, et

- un guide incurvé dont une extrémité prolonge inférieurement l'entonnoir, dont la section transversale va en décroissant à partir de cet entonnoir et dont l'autre extrémité forme un convergent dont l'extrémité de plus faible section transversale est destinée à communiquer avec l'intérieur du conteneur, cette plus faible section transversale étant légèrement supérieure à la section transversale maximale des barreaux, la courbure du guide étant prévue pour que l'axe du convergent puisse faire le même angle que le conteneur avec la verticale.

De façon avantageuse, le dispositif peut comprendre en outre, à l'intérieur du guide, des moyens d'amortissement de vibrations et de freinage des barreaux lorsque ceux-ci circulent les uns après les autres à travers le guide.

Les moyens d'amortissement et de freinage peuvent comprendre des lames élastiques fixées à la paroi interne du guide et s'écartant de celle-ci en direction de ladite autre extrémité du guide.

Ladite autre extrémité du guide peut comporter une bride qui est traversée par le convergent, qui est munie de moyens de positionnement de ce convergent par rapport à l'intérieur du conteneur et qui est destinée à être raccordée à l'extrémité ouverte de ce conteneur, munie d'une bride à cet effet, le convergent étant situé, sur la bride qu'il traverse, de façon que son extrémité de plus faible section transversale se trouve sous le bord supérieur de l'extrémité ouverte du conteneur lorsque les brides sont raccordées l'une à l'autre.

La présente invention a également pour objet un conteneur de barreaux pour assemblage de combustible nucléaire, caractérisé en ce qu'il a une forme allongée, en ce qu'il comporte une extrémité ouverte à travers laquelle sont destinés à passer les barreaux pour être rangés dans ce conteneur, en ce que sa paroi interne est cylindrique, et en ce que l'extrémité ouverte du conteneur est munie d'une bride destinée à être en appui contre une autre bride munie de moyens de guidage et pourvue d'un perçage qui est tangent à la paroi interne du conteneur lorsque les brides sont en appui l'une contre l'autre.

La paroi interne du conteneur peut avoir une section transversale hexagonale. Alors, le conteneur, lorsqu'il est utilisé avec le dispositif objet de l'invention, permet un empilement compact des barreaux qui arrivent les uns après les autres de leurs moyens de support.

Le conteneur objet de l'invention peut comprendre en outre un bouchon prévu pour fermer de façon étanche l'extrémité ouverte du conteneur de façon à pouvoir transporter celui-ci vers des installations de traitement ou d'étude des barreaux.

La présente invention sera mieux comprise à la lecture de la description suivante, d'exemples de réalisation donnés à titre purement indicatif et nullement limitatif, en référence aux dessins annexés sur lesquels :

- la figure 1 est une vue schématique d'un mode de réalisation particulier du dispositif objet de l'invention,

- la figure 2 est une vue en coupe transversale d'un conteneur utilisable avec le dispositif représenté sur la figure 1,

- la figure 3 est une vue schématique de la liaison entre le conteneur et le dispositif, et

- la figure 4 montre schématiquement le conteneur muni d'un bouchon de fermeture.

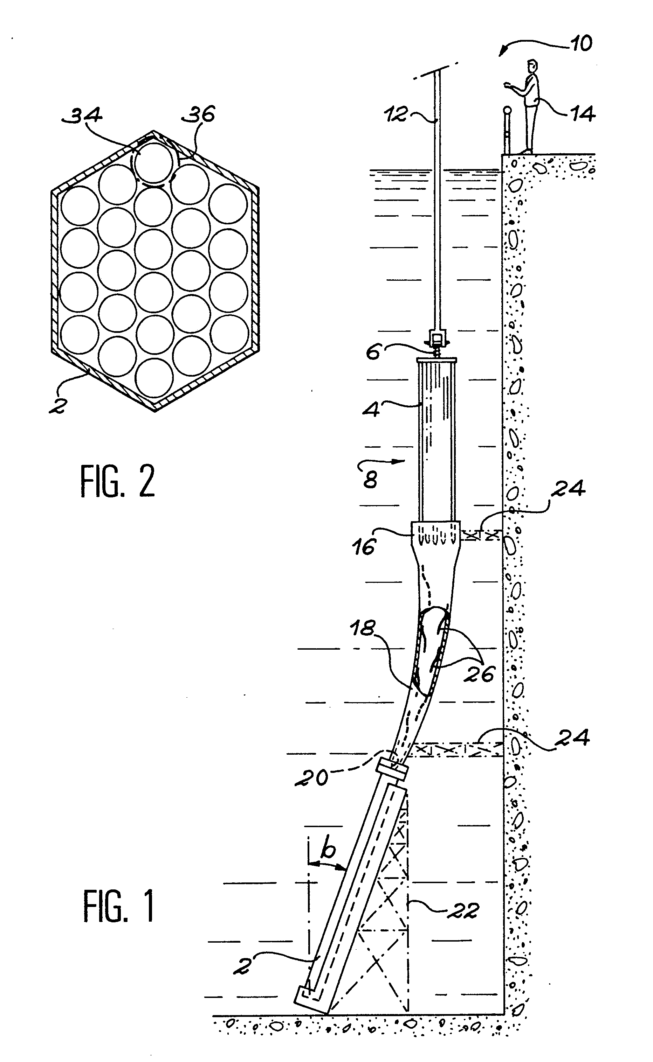

Sur la figure 1, on a représenté un mode de réalisation particulier du dispositif objet de l'invention, permettant de transférer et de ranger automatiquement dans un conteneur 2 de forme allongée des barreaux 4 pour assemblage de combustible nucléaire, par exemple des barreaux de substance absorbant les neutrons. Ces barreaux 4 sont suspendus verticalement à des moyens de support 6 qui constituent avec lesdits barreaux une grappe de barreaux. Par ailleurs, on peut agir sur cette grappe pour faire tomber les barreaux les uns après les autres de leurs moyens de support 6. Des exemples de techniques permettant de faire ainsi tomber les barreaux sont indiqués dans les deux brevets mentionnés plus haut.

Sur la figure 1, on voit que la grappe 8 comportant les barreaux 4, auparavant irradiés dans un réacteur nucléaire, a été extraite de l'assemblage combustible (non représenté) dans lequel elle se trouvait, cette opération d'extraction ayant eu lieu dans la piscine de désactivation 10 attenante au réacteur. Comme on le voit sur la figure 1, la grappe, une fois extraite de son assemblage combustible, est suspendue par des moyens appropriés 12, à une profondeur convenable dans la piscine. La hauteur d'eau située au-dessus de la grappe 8 permet d'assurer la protection biologique des opérateurs 14 contre les rayonnements émis par les barreaux. Par ailleurs, la hauteur d'eau située sous la grappe est déterminée de façon à pouvoir y loger l'ensemble du dispositif de transfert et de rangement représenté sur la figure 1.

Ce dernier comprend de haut en bas : un entonnoir 16 et un guide incurvé 18 terminé à sa partie inférieure par un convergent 20. Le conteneur 2, dont la longueur est bien entendu adaptée à celle des barreaux pour pouvoir loger ceux-ci dans ledit conteneur, est maintenu dans une position inclinée d'un angle b par rapport à la verticale, au moyen d'une structure appropriée 22 qui repose sur le fond de la piscine 10. Le guide 18, qui prolonge l'entonnoir 16 et qui est lui-même terminé par le convergent 20, est également maintenu par des moyens appropriés 24 qui sont fixés à une paroi de la piscine 10.

L'entonnoir 16 contient l'ensemble des extrémités inférieures respectives des barreaux 4 qui sont suspendus verticalement à leurs moyens de support 6, l'axe de cet entonnoir étant vertical.

Chaque barreau maintenu par ces moyens de support peut occuper au départ, c'est-à-dire avant sa chute, n'importe quel point d'un domaine qui correspond à la surface moyenne de la grappe vue en coupe transversale, voire à une surface supérieure si les barreaux présentent des distorsions.

L'entonnoir 16 a pour fonction de ramener la trajectoire de l'extrémité inférieure de chaque barreau, qui tombe de ses moyens de support, de ce domaine vers un domaine de diamètre inférieur.

Le guide incurvé 18 est prévu pour réduire encore progressivement le diamètre du domaine de trajectoire du barreau et pour modifier l'inclinaison de cette trajectoire qui, de verticale au départ, forme, à la sortie du guide 18, un angle b avec la verticale. Ainsi, la courbure du guide est telle qu'au niveau de l'entonnoir 16 l'axe du guide soit vertical et qu'au niveau du convergent 20 l'axe de ce guide fasse l'angle b avec la verticale et puisse ainsi se raccorder au conteneur 2 lui-même incliné de l'angle b par rapport à la verticale.

On peut disposer à l'intérieur du guide 18 des moyens d'amortissement des vibrations et de freinage du barreau en cours de transfert vers le conteneur. Ces moyens d'amortissement et de freinage peuvent être constitués par des lames métalliques élastiques 26 qui sont fixées par une extrémité à la paroi interne du guide 18 et qui s'étendent en direction de l'extrémité inférieure de ce guide.

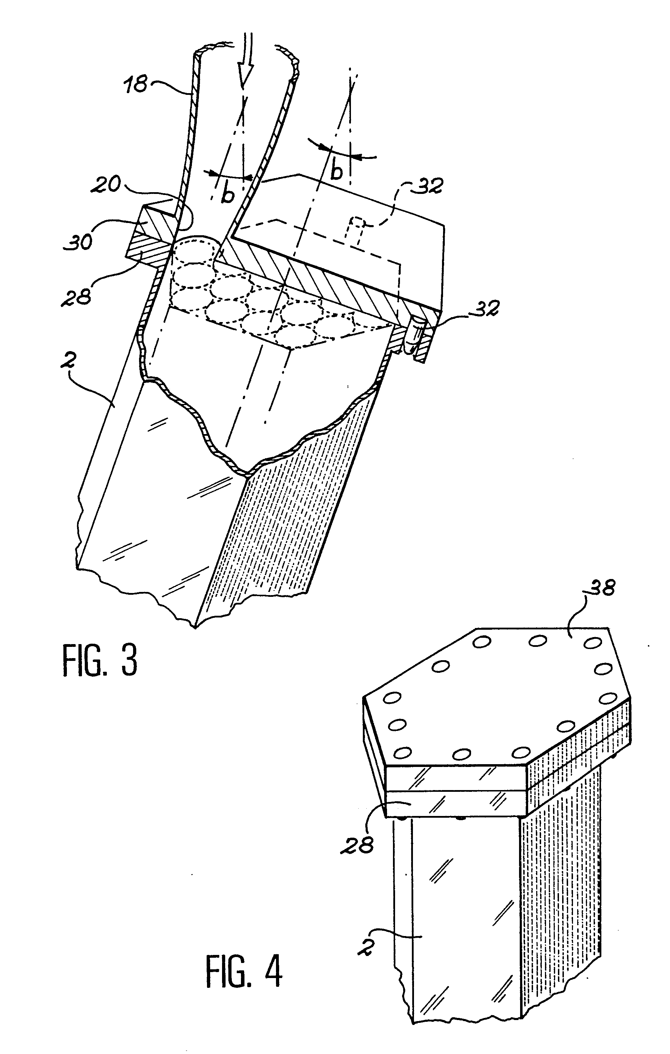

Le convergent 20, dont le diamètre intérieur de sortie est légèrement supérieur (par exemple de 10 à 20%, voire moins) au diamètre extérieur maximal des barreaux, permet de positionner de façon précise l'extrémité inférieure d'un barreau lorsque celle-ci se présente à l'entrée du conteneur 2, comme on le voit sur la figure 3. Par "de façon précise", on entend "à quelques millimètres près", car les barreaux sont munis à leur extrémité inférieure d'un bouchon profilé, ce qui permet une certaine latitude dans le positionnement.

Le conteneur 2 est une boîte dont la liaison avec le guide 18 est précisée sur la figure 3. Cette boîte présente à sa partie supérieure une bride 28 contre laquelle vient s'appuyer une bride 30 dont est pourvue l'extrémité inférieure du guide 18, le convergent 20 traversant cette bride 30. Des pions de guidage 32, solidaires de la bride 30, s'engagent dans des logements prévus à cet effet dans la bride 28 et permettent de positionner la sortie du convergent 20 par rapport à la cavité intérieure du conteneur 2.

Cette cavité intérieure du conteneur 2 peut avoir, comme on le voit sur la figure 2, une section transversale en forme d'hexagone, ce qui permet le rangement le plus compact des barreaux. Les dimensions de cette cavité intérieure dépendent lien entendu du diamètre et du nombre des barreaux qu'on souhaite y stocker. Sur la figure 2, on a représenté un conteneur qui est conçu pour une grappe classique à 24 barreaux, du genre de celles qui sont utilisées dans les réacteurs à eau sous pression en service en France.

L'inclinaison b de l'axe longitudinal du conteneur 2 avec la verticale a notamment pour but de remettre chaque barreau parfaitement rectiligne malgré la distorsion qu'il peut avoir subie par suite de son irradiation. L'angle b est optimisé : il est assez faible pour que la composante tangentielle du poids du barreau soit suffisante pour faire glisser ce barreau jusqu'au fond du conteneur malgré le frottement contre les parois de ce conteneur et les barreaux qui l'ont précédé dans ce dernier, tout en étant assez important pour que la composante normale du poids du barreau soit suffisante pour rendre ce dernier rectiligne.

Compte tenu de la raideur en flexion des barreaux classiques et des distorsions maximales observées après irradiation, un angle de l'ordre de 15° à 20° est généralement convenable. La valeur optimisée de cet angle conditionne à son tour la longueur minimale que doit avoir le guide incurvé 18 pour ne pas imposer au barreau une flèche exagérée au moment de son passage à travers ce guide : plus l'angle b est important et plus le guide doit être long.

Il faut également orienter la section hexagonale du conteneur 2 par rapport à l'horizontale avec un sommet de l'hexagone vers le bas comme le montre la figure 2. Ainsi, le premier barreau est conduit par son poids vers le fond du dièdre formé par les deux faces inférieures de l'intérieur du conteneur et prend une forme parfaitement rectiligne. Chaque barreau suivant rencontre aussi une surface sensiblement en forme de dièdre, définie par une paroi interne du conteneur et par les barreaux qui l'ont précédé. Ainsi, tous les barreaux prennent en se rangeant dans le conteneur une forme rectiligne, les barreaux étant parallèles les uns aux autres, et l'on obtient un rangement compact en réseau hexagonal, de bas en haut et rangée par rangée.

Pour obtenir un bon rangement des barreaux jusqu'au dernier, la sortie du convergent 20 est positionnée par les pions 32 en face de l'endroit où doit être rangé le dernier barreau 34 (figure 2), juste sous le sommet supérieur 36 de l'hexagone. Cette sortie du convergent est indiquée par des pointillés 36 sur la figure 2.

Pour tenir compte des distorsions résiduelles possibles des barreaux, la cavité hexagonale est prévue légèrement plus grande que celle correspondant à un empilement hexagonal théorique.

Après l'introduction de tous les barreaux, le conteneur de stockage 2 peut être retiré de sa structure de maintien 22. Il peut également servir à l'évacuation des barreaux hors de la centrale nucléaire et au transport de ces barreaux, après avoir été muni d'un bouchon étanche 38 (figure 4) que l'on fixe sur la bride 28.

Il convient de noter que, si la forme décrite du conteneur, cylindrique à section hexagonale, est particulièrement intéressante parce qu'elle permet un rangement progressif et compact des barreaux, on ne sort pas du cadre de l'invention en utilisant un conteneur de forme générale cylindrique, mais présentant une autre section, circulaire ou elliptique par exemple, surtout si l'on s'assure bien que, compte tenu de l'inclinaison du conteneur, l'entrée de ce dernier contient la génératrice la plus haute du cylindre.

## Revendications

1. Dispositif de transfert et de rangement, dans un conteneur (2) de forme allongée, de barreaux (4) pour assemblage de combustible nucléaire, ces barreaux étant suspendus verticalement à des moyens de support (6) sur lesquels on peut agir pour faire tomber les barreaux les uns après les autres, ce dispositif étant caractérisé en ce qu'il comprend des moyens de récupération et de guidage (16, 18, 20) qui ont une extrémité supérieure et une extrémité inférieure ouvertes et qui sont prévus pour récupérer chaque barreau (4) que l'on fait tomber des moyens de support (6) et pour guider ce barreau, soumis à son poids, vers le conteneur (2), ce dernier étant incliné par rapport à la verticale et ouvert en son extrémité supérieure, l'extrémité inférieure des moyens de récupération et de guidage (16, 18, 20) étant destinée à communiquer avec l'intérieur du conteneur par l'extrémité supérieure de ce dernier de façon que les barreaux puissent être rangés successivement dans le conteneur.

2. Dispositif selon la revendication 1, caractérisé en ce que l'intérieur du conteneur (2) étant en forme de cylindre, l'ouverture de son extrémité supérieure contient la génératrice la plus haute de ce cylindre, compte tenu de son inclinaison par rapport à la verticale.

3. Dispositif selon l'une quelconque des revendications 1 et 2, caractérisé en ce que les moyens de récupération et de guidage comprennent :
- un entonnoir (16) qui se trouve en leur extrémité supérieure et qui est prévu pour recevoir les barreaux (4) après leur séparation des moyens de support (6), et
- un guide incurvé (18) dont une extrémité prolonge inférieurement l'entonnoir, dont la section transversale va en décroissant à partir de cet entonnoir et dont l'autre extrémité forme un convergent (20) dont l'extrémité de plus faible section transversale est destinée à communiquer avec l'intérieur du conteneur, cette plus faible section transversale étant légèrement supérieure à la section transversale maximale des barreaux, la courbure du guide étant prévue pour que l'axe du convergent puisse faire le même angle que le conteneur (2) avec la verticale.

4. Dispositif selon la revendication 3, caractérisé en ce qu'il comprend en outre, à l'intérieur du guide (18), des moyens (26) d'amortissement de vibrations et de freinage des barreaux (4) lorsque ceux-ci circulent les uns après les autres à travers le guide.

5. Dispositif selon la revendication 4, caractérisé en ce que ces moyens d'amortissement et de freinage comprennent des lames élastiques (26) fixées à la paroi interne du guide (18) et s'écartant de celle-ci en direction de ladite autre extrémité du guide.

6. Dispositif selon l'une quelconque des revendications 3 à 5, caractérisé en ce que ladite autre extrémité du guide (18) comporte une bride (30) qui est traversée par le convergent (20), qui est munie de moyens (32) de positionnement de ce convergent par rapport à l'intérieur du conteneur (2) et qui est destinée à être raccordée à l'extrémité ouverte de ce conteneur, munie d'une bride (28) à cet effet, le convergent étant situé, sur la bride qu'il traverse, de façon que son extrémité de plus faible section transversale se trouve sous le bord supérieur de l'extrémité ouverte du conteneur lorsque les brides sont raccordées l'une à l'autre.

7. Conteneur de barreaux pour assemblage de combustible nucléaire, caractérisé en ce qu'il a une forme allongée, en ce qu'il comporte une extrémité ouverte à travers laquelle sont destinés à passer les barreaux (4) pour être rangés dans ce conteneur (2), en ce que sa paroi interne est cylindrique, et en ce que l'extrémité ouverte du conteneur est munie d'une bride (28) destinée à être en appui contre une autre bride (30) munie de moyens de guidage (32) et pourvue d'un perçage (20) qui est tangent à la paroi interne du conteneur lorsque les brides sont en appui l'une contre l'autre.

8. Conteneur selon la revendication 7, caractérisé en ce que sa paroi interne a une section transversale hexagonale.

9. Conteneur selon l'une quelconque des revendications 7 et 8, caractérisé en ce qu'il comprend en outre un bouchon (38) prévu pour fermer de façon étanche l'extrémité ouverte du conteneur.

FIG. 2

FIG. 1

FIG. 3

FIG. 4

Office européen des brevets

# RAPPORT DE RECHERCHE EUROPEENNE

Numero de la demande

EP 90 40 0165

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 556 489 (K.K. ROBE SEIKO SHO) * Page 6, ligne 2 - page 7, ligne 30; figures 1,2,5,8-10 * --- | 1,7 | G 21 C 19/34 G 21 F 5/008 |
| A | WO-A-8 304 454 (TRANSNUCLEAIRE) * Page 8, ligne 25 - page 9, ligne 21; figures 1,6-9 * --- | 1,3,4,7 | |
| A | EP-A-0 171 774 (DEUTSCHE GESELLSCHAFT FÜR WIEDERAUFARBEITUNG VON KERNBRENNSTOFFE mbH) * Page 9, lignes 19-23; page 10, lignes 22-24; page 14, lignes 14-23; figures 1-6 * ----- | 1,2,6,7 ,9 | |

| | | | DOMAINES TECHNIQUES RECHERCHES (Int. Cl.5) |
|---|---|---|---|
| | | | G 21 C 19/00 G 21 F 5/00 |

**Le présent rapport a été établi pour toutes les revendications**

| Lieu de la recherche | Date d'achèvement de la recherche | Examinateur |
|---|---|---|
| LA HAYE | 28-03-1990 | JANDL F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)